Europäisches Patentamt

European Patent Office

Office européen des brevets

(11) Publication number: **0 110 441**
A1

## EUROPEAN PATENT APPLICATION

(21) Application number: 83201507.7

(22) Date of filing: 20.10.83

(51) Int. Cl.³: **F 16 L 37/08**, F 16 L 1/00

(30) Priority: 24.11.82 IT 2440182

(71) Applicant: Bormioli, Giorgio, Via Galileo Galilei 11, I-35100 Padova (IT)

(43) Date of publication of application: 13.06.84
Bulletin 84/24

(72) Inventor: Bormioli, Giorgio, Via Galileo Galilei 11, I-35100 Padova (IT)

(84) Designated Contracting States: **BE DE FR GB IT NL**

(74) Representative: Mittler, Enrico, Corso Buenos Aires, 64, I-20124 Milano (IT)

(54) Device for the head-to-head junction of two pipes for the transfer of fluid oil products, particularly for high-depth submarine use.

(57) There is fixed to a first pipe (2) a winch (21), from which there unwinds a draw cable (23), which develops inside the end length (6) of the same pipe (2) along the axis thereof. Said draw cable (23) ends attached to a central point (27) of the end length (15) of the second pipe (17). When said cable (23) is driven to wind on the winch (21), it therefore exerts on the second pipe (17) a tensile action in axial direction, which brings the second pipe (17) to carry out a perfect head-to-head engagement with the first pipe (2).

EP 0 110 441 A1

ACTORUM AG

"Device for the head-to-head junction of two pipes for trans-
fer of fluid oil products, particularly for high-depth submarine
use".

* * * * * *

The present invention relates to a device for the head-to-head
junction of two pipes for the transfer of fluid oil products,
particularly but not exclusively for high-depth submarine use.

It is known that the transfer of fluid oil products from the
delivery point to the collection point involves particular problems, which are the subject matter of specific studies and technical solutions.

This is particularly true in relation to the junction of the
pipes which provide for the above said transfer, particularly
when the junction is to be made on the open sea, where the logistic conditions are particularly hard and create not-negligible
difficulties.

The present invention is just mainly directed to solve the
problems connected to the execution of junctions in particularly
uncomfortable position, such as those to be executed at high
depth under the sea level between a rigid pipe coming from the
drilling place, more precisely from the boring head, and a flexi
ble hose lowered into the sea from the collection ship.

In particular, the invention aims to realize a device which
allows the execution of junctions of that kind in automatic way
and with maximum security of perfect final result.

This is obtained according to the invention by a device char-
acterized in that it comprises a winch fixed to a first pipe and
a draw cable, which unwinds from said winch, develops inside an
end length of said first pipe along the axis thereof and finally
ends attached to a central point of a corresponding end length

BAD ORIGINAL

of the second pipe, so as to exert thereon, when driven to wind on said winch, a tensile action towards said end length of the first pipe in a direction coinciding with the axis of the latter.

Assumed that the above said "first pipe" is the rigid one coming from the drilling place, wherein the necessary controls for the operation of the winch can be brought in known way, and that the "second pipe" in its turn is formed by the flexible hose to be connected, it is clear that the progressive winding of the draw cable on the winch causes the progressive approach of the end length of the flexible hose to the corresponding end length of the rigid pipe in a direction substantially coinciding with the axis of the latter. It results that, possibly with the assistance of suitable guide means fixed to the rigid pipe, the end length of the hose is brought to abut exactly against the corresponding end length of the rigid pipe, thereby carrying out the desired head-to-head junction. At that time, an usual quick-operation coupling device, also associated to the rigid pipe, may be operated for looking the two pipes in the attained position.

Without any man's intervention at the junction area, but, on the contrary, in totally automatic way after a simple control imparted to the draw cable driving winch, the sure result of a perfect head-to-head junction of the two pipes is thus obtained. This is obviously thanks to the axial tensile stress exerted at the hose center in the direction of the rigid pipe by the draw cable which develops along the axis of the latter.

A simple, but sure, device of this kind is not destined obviously only for this even important use. On the contrary, it may be used each time there exist problems to bring a movable pipe in exact head-to-head engagement with a fixed pipe. For example, it may be possible since now to think about its use for lifting from the water and joining to a pipe mounted on a ship a flexible hose floating in the sea. In that case also, in fact, the operation of the winch carried by the rigid pipe can only cause the progressive movement of the hose in the direction of the axis of the rigid pipe, until the desired head-to-head engagement is reached. A twisting of the hose may perhaps occur, but the direction of movement and the centering will be assured in any case.

Only by way of non-limiting example it will be described in detail hereinafter an embodiment of the device according to the invention, which is specifically intended for submarine use, particularly for the junction of a flexible hose to a rigid pipe coming from a drilling place. Said embodiment is illustrated in the enclosed drawings, in which:

Fig. 1 shows the device according to the invention in axial section before the junction between the two pipes is made;

Fig. 2 shows said device once the junction has been made;

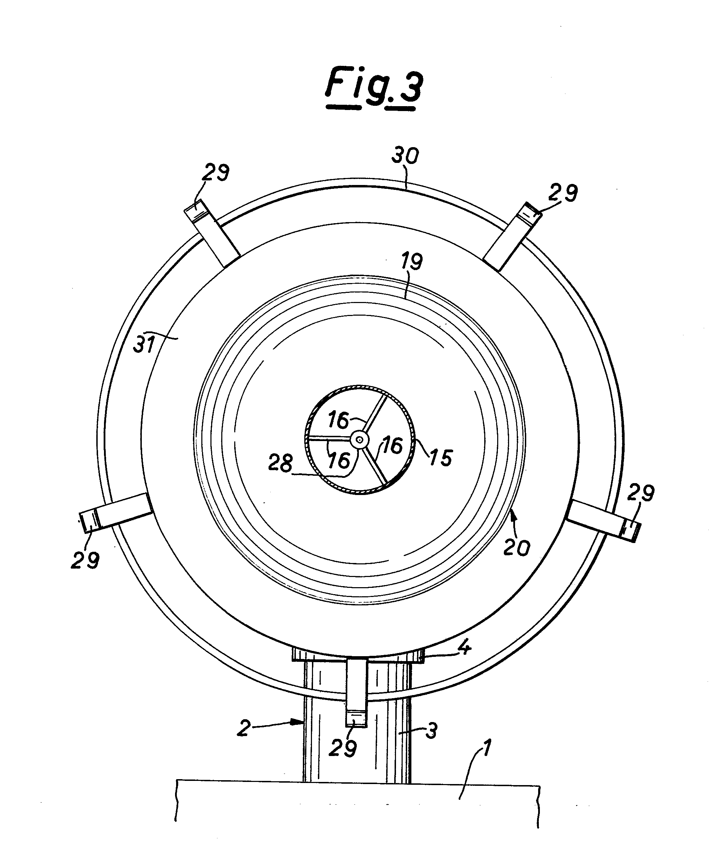

Fig. 3 shows said device in transversal section along line II-1II of Fig. 2.

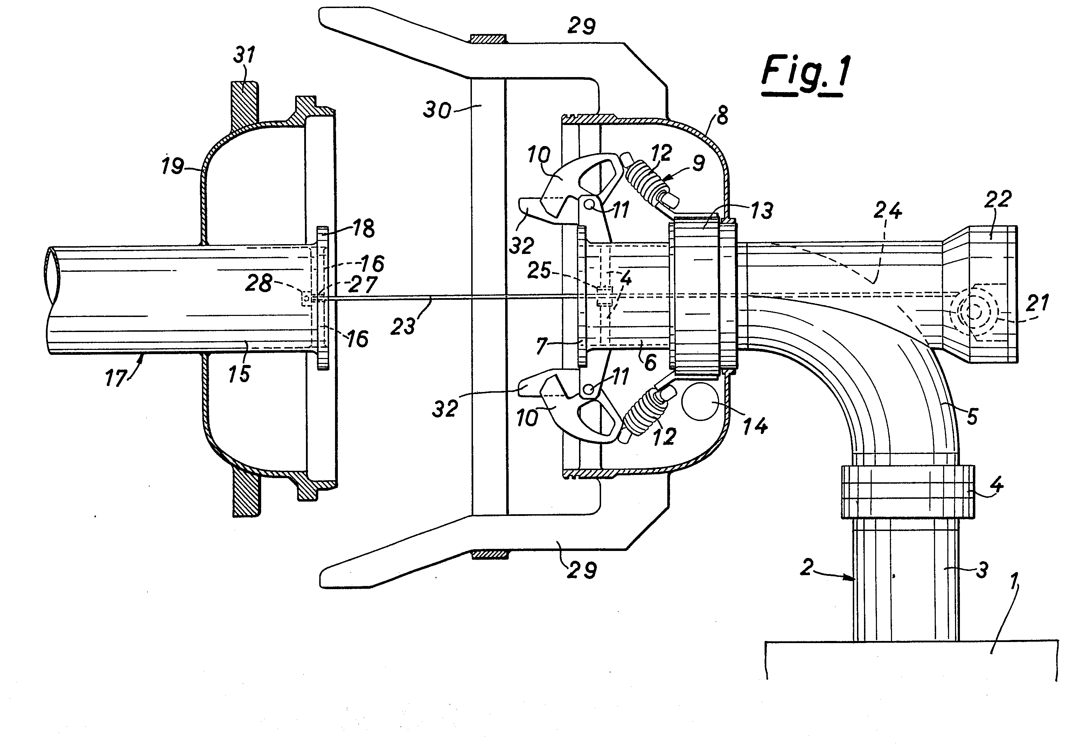

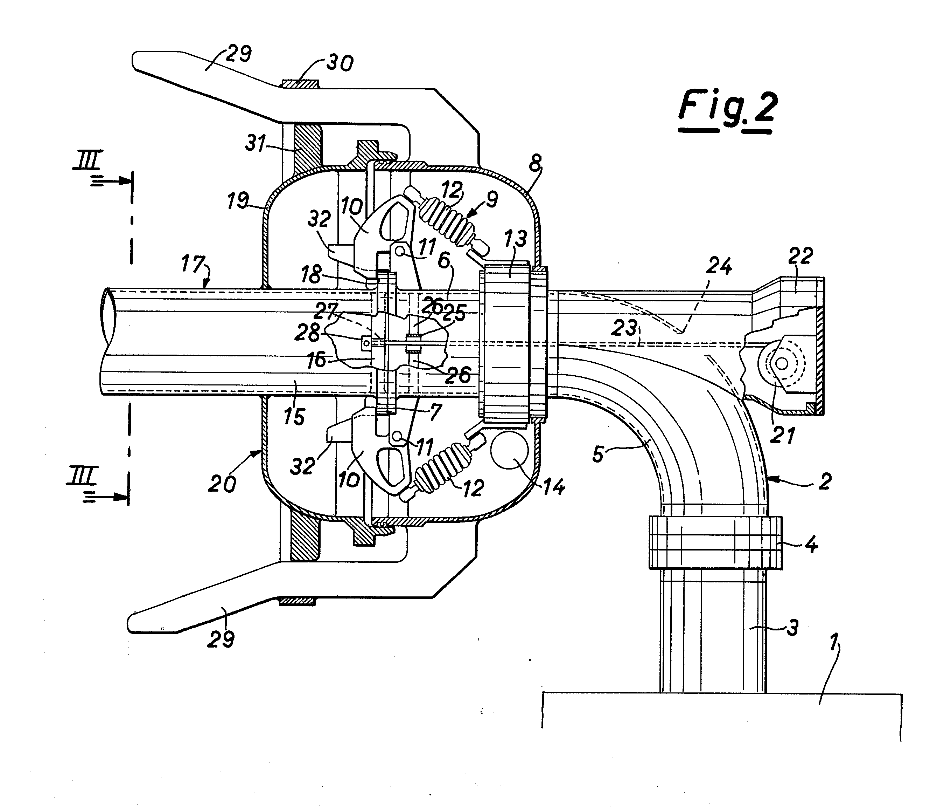

In the drawings, the reference number 1 indicates a drilling place, from which there comes a pipe 2 (since now called "fixed pipe") formed by a vertical length 3, by a rotary joint 4, by a curved length 5 and by a horizontal end length 6 provided with a flange 7. To the end length 6, inside a half-shell case 8, there is associated a quick-operation coupling device 9, which comprises in known way a plurality of circumferentially spaced rotating jaws 10, pivoted at 11, which respective elastic rods 12 connect to a common rotating ring 13 controlled by a cylinder 14. As better described in the Italian patent No. 844387, of which the same Applicant of the present Application is owner, the rotation of the rotating ring 13, controlled by the hydraulic cylinder 14, is converted by the elastic rods 12 into a rotation of the jaws 10 from the open position of Fig. 1 to the closed position of Fig. 2, and viceversa.

The reference number 15 in its turn indicates the rigid end length of a flexible hose 17 (since now called "movable pipe"), which is to be joined in head-to-head engagement to the corresponding end length 6 of the fixed pipe 2. An end flange 18 is arranged for the gripping by the jaws 10 of the coupling device 9, as illustrated in Fig. 2. A half-shell case 19 is further fixed to said end length 16 in suitable position for the coupling thereof with the corresponding half-shell case 8 of the fixed pipe 2, so as to form a box-like case 20, which is a waterproof protective casing for the area of junction of the two pipes.

In order to carry out the head-to-head engagement between the two pipe, 2 and 17, or better between their end lengths 6 and 15, there is provided according to the invention a device substantially constituted by a winch 21 (suitably driven by motor) housed inside a box-like housing 22 fixed to the curved length 5 of the fixed pipe 2 and by a draw cable 23 (for example, a rope), which unwinds from the winch 21 , passes through a window 24 of the curved length 5 of the pipe 2, develops inside the end length 6 of the same pipe 2 along the longitudinal axis thereof, passes through a guide sleeve 25 substained at the center of the above said end length 6 by a plurality of radial spokes 26, further passes through a bore 27 defined at the center of the end length 15 of the movable pipe 17 between converging radial spokes 16 and finally ends attached to a head 28 located beyond the bore 27 and, therefore, at the center of the pipe 17.

There are finally provided mutual guide means for the two half-shells 8 and 19 fixed to the two pipes 2 and 17. Said guide means consist, for the fixed pipe 2, of projecting ribs 29 flared as invitation at the free ends and radially held by a ring 30 and, for the movable pipe 17, of an annular flange 31, which can be forced inside the ribs 29. Further ribs 32 are moreover fixed to the ends of the fixed pipe 2 to guide and center the end flange 18 of the movable pipe 17.

As a result of the described structure, when it is desired to carry out the head-to-head junction of the two pipes 2 and 17, it is sufficient to drive the winch in the sense of winding of the draw cable 23, by using at that end the usual control channels associated to the drilling places, in particular to the boring head. The cable 23, guided in axial direction by the sleeve 25, then exerts a tensile stress in axial direction on the movable pipe 17, which progressively approaches the fixed pipe 2, while remaining substantially axially aligned with the end length 6 of the latter. By exploiting also the centering assured by the projecting ribs 29, the end length 15 of the pipe 17 therefore arrives at the abutment with the corresponding end length 6 of the fixed pipe 2 and is finally locked therein by the coupling device 9.

Once the connection of the two pipes has been completed, the water contained in the connected pipes is removed by introducing oil from the top. Being lighter, the oil pushes out the water from the bottom.

CLAIMS

1. Device for the head-to-head junction of two pipes for the transfer of fluid oil products, particularly for high-depth submarine use, characterized in that it comprises a winch fixed to a first pipe and a draw cable, which unwinds from said winch, develops inside an end length of said first pipe along the axis thereof and finally ends attached to a control point of a corresponding end length of the second pipe, so as to exert thereon, when driven to wind on said winch, a tensile action towards said end length of the first pipe in a direction coinciding with the axis of the latter.

2. Device according to claim 1, characterized in that there is also fixed to said first pipe a quick-operation coupling device for locking the two pipes in head-to-head engagement.

3. Device according to claim 1, characterized in that there are fixed to the end length of the two pipes respective mutually insertable parts of a waterproof box-like casing destined for closing sealtight the junction area between the two pipes.

4. Device according to claim 2, characterized in that it comprises cooperating guide means associated to said insertable parts of the box-like casing to guide said second pipe in correct centering condition with respect to the first pipe.

5. Device according to claim 1, characterized in that said first pipe is rigid, while said second pipe makes part of a flexible hose.

_Fig.1_

_Fig.2_

# Fig.3

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | EP 83201507.7 |
| A | US - A - 4 190 086 (BORMIOLI)<br>* Totality *<br>-- | 1 | F 16 L 37/08<br>F 16 L 1/00 |
| A | GB - A - 1 374 837 (SUBSEA EQUIP-MENT ASSOCIATES LIMITED)<br>* Totality *<br>---- | 1 | |

**TECHNICAL FIELDS SEARCHED (Int. Cl. ³)**

F 16 L 1/00

F 16 L 17/00

F 16 L 19/00

F 16 L 27/00

F 16 L 37/00

F 16 L 55/00

The present search report has been drawn up for all claims

| Place of search | Date of completion of the search | Examiner |
|---|---|---|
| VIENNA | 24-01-1984 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82